# EUROPEAN PATENT APPLICATION

(11) **EP 0 684 177 A2**
(43) Date of publication of application: **29.11.1995**
(21) Application number: 95201354.8
(22) Date of filing: 23.05.1995
(51) Int. Cl.: B62B 5/04, A61G 5/10

(54) **Hub brake and wheelchair comprising such a hub brake**

(30) Priority: 26.05.1994 NL 9400865
(71) Applicant: LIGTVOET PRODUCTS B.V., NL-5503 XV Veldhoven (NL)
(72) Inventor: van der Vorst, Arnoldus M.J., NL-5667 DW Geldrop (NL)
(74) Representative: Iemenschot, Johannes Andreas, Ir.

(57) **Abstract**

Hub brake for braking a hub (1) which is rotatable about a stationary axle (2) projecting into the hub. The hub brake comprises a cone (4) to be fitted so that it is stationary on the axle, a cone (5) which is slidable along the axle and is secured against rotation, an expandable brake jacket (6) which interacts with both cones, and a control element (11, 12) which is placed next to the slidable cone so that it is axially fixed and can rotate about the axle. The control element interacts with the slidable cone (5) in such a way that when the control element rotates about the stationary axle (2) the slidable cone is pressed into the brake jacket in the direction of the fixed cone, with the result that the brake jacket resting on the two cones expands and acts in a braking manner on the inside of the hub. The control element is lockable in a position in which the slidable cone (5) is pressed in the direction of the fixed cone (4), in order to keep the hub (1) blocked relative to the stationary axle (2).

## Description

The present invention relates to a hub brake for braking a hub according to the preamble of claim 1.

Such a hub brake is generally known in the form of a back-pedalling brake for braking the rear wheel of a bicycle. In this case the control element of the hub brake is essentially formed by the rear chain wheel of the bicycle. The hub brake known for bicycles is mass-produced at low cost as a product of reliable quality.

An object of the present invention is to develop the known hub brake further in such a way that the hub brake is also suitable for applications other than as a back-pedalling brake for bicycle wheels. A particular object of the present invention is to provide a hub brake which is lockable in its braking position. Locking the hub brake means that the wheel of which the hub brake forms part is then blocked. Such a hub brake is suitable in particular for use in wheelchairs, particularly in the hub of the hand-rim wheels of manually operated wheelchairs.

The present invention therefore provides a hub brake of the type mentioned in the preamble, which is characterized in that the control element is lockable in a position in which the slidable cone is pressed in the direction of the fixed cone, in order to keep the hub blocked relative to the stationary axle.

In a particular embodiment the hub brake comprises a locking mechanism which couples the control element to the stationary axle in a locked angular position. The hub is blocked and thus prevented from rotation if the control element which can rotate about the stationary axle is fixed on the stationary axle in the locked angular position in which the brake jacket presses with braking action against the hub.

In another embodiment the control element is provided with means for locking the control element in a locked angular position relative to the slidable cone. Since the slidable cone cannot rotate about the stationary axle and the control element cannot slide axially along the stationary axle, the mutual locking of the slidable cone and the control element in the locked angular position in which the hub is braked leads to the desired blocking effect.

At their sides facing each other the slidable cone and the control element are preferably each provided with at least one recess, and a rolling element is disposed in a cavity bounded by two interacting recesses of the cone and the control element respectively, the recesses being formed in such a way that in a first mutual angular position of the cone and the control element the axial distance between the slidable cone and the control element is smaller than it is in a second angular position. In this case the slidable cone is not pressed into the brake jacket in the first angular position, which means that the hub is not braked. In the second angular position the greater distance between the slidable cone and the control element which is not slidable axially along the stationary axle means that the slidable cone is pressed into the brake jacket, causing the hub to be blocked.

The blocking of the hub relative to the stationary axle is preferably achieved through at least one recess being designed in such a way that it comprises a deeper part and a shallower part communicating therewith by way of a relative elevation, while in the second mutual angular position of the slidable cone and the control element the rolling element lies in the shallower part of said recess. The relative elevation between the two parts of the recess ensures that the rolling element does not come out of the shallower part too easily, thereby causing the blocking action to be removed accidentally.

In an advantageous embodiment the slidable cone and the control element are each provided with at least one pair of recesses which are made symmetrical relative to the axis of the stationary axle to be passed through them. This embodiment is not only advantageous as regards production, but it also ensures that the slidable cone is pressed down symmetrically.

In another advantageous embodiment the control element comprises a ring in which the recesses are formed, and which fits with play around the stationary axle, and a rotary element which fits without play around the stationary axle, while a driver coupling for transmitting the rotary movement of the rotary element to the ring is present between the ring and the rotary element. Adjusting means are preferably provided for setting the position of the ring relative to the rotary element. The play between the ring and the stationary axle in this case permits an adjustment of the angular position of the ring relative to the stationary axle.

In a very advantageous embodiment a first bearing is fitted around the stationary cone, and a second bearing is fitted around the control element, for the purpose of supporting the hub in a rotatably mounted manner. This embodiment corresponds to the back-pedalling brake for bicycle wheels described in the introduction, and one of its advantages is that the construction is compact. This embodiment also provides the important possibility of producing the hub brake according to the invention by starting from the known back-pedalling brake and adapting the control element in the manner explained above.

The present invention also relates to an axle assembly, comprising a hub brake of the type described above and a hollow axle, one part of which projects into the hub brake, while a part which projects from the hub brake at one side is provided with coupling elements which are movable into and out of the axle, and a control rod extending through the hollow axle and projecting from the hollow axle at the end opposite the coupling elements is present for moving the coupling elements. The projecting end of the axle can then be inserted into a holder of, for example, a wheelchair chassis, while the coupling elements fix the axle in the holder. Such a rapidly connectable and disconnectable axle assembly is particularly advantageous for wheelchairs which are transportable in loose parts.

Finally, the exclusive right applied for relates to a wheelchair wheel which is provided with a hub brake of the type described above.

The invention will be explained in greater detail below with reference to a preferred embodiment of the hub brake according to the invention shown diagrammatically in the drawing, in which:
Fig. 1 shows diagrammatically a longitudinal section of a hub brake with a rapidly connectable stationary axle fitted in a hub of a hand-rim wheel of a wheelchair;
Fig. 2a shows a longitudinal section of the stationary cone of the hub brake in Fig. 1;
Fig. 2b shows a view of the stationary cone in the direction of arrow III in Fig. 2a;
Fig. 3a shows a longitudinal section of the slidable cone of the hub brake in Fig. 1;
Fig. 3b shows a view of the slidable cone in the direction of arrow IV in Fig. 3a;
Fig. 3c shows a view of the slidable cone in the direction of arrow V in Fig. 3a;
Fig. 3d shows a section along the line VI-VI in Fig. 3c;
Fig. 4a shows a longitudinal section of the adjusting ring of the hub brake in Fig. 1;
Fig. 4b shows a view of the adjusting ring in the direction of arrow VII in Fig. 4a;
Fig. 4c shows a section along the line VIII-VIII in Fig. 4b;
Fig. 5a shows a diagrammatic view of the relative position of the slidable cone and the adjusting ring of the hub brake in Fig. 1 in the non- braking position; and
Fig. 5b shows a view corresponding to that of Fig. 5a, in the blocking position of the hub brake.

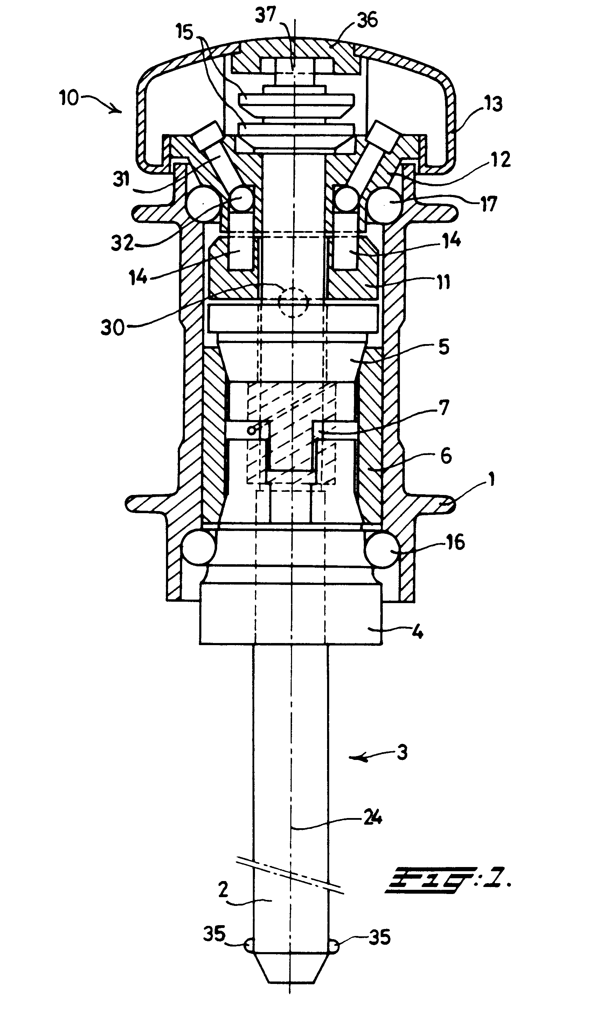

Fig. 1 shows a hub 1 fitted in a hand-rim wheel (not shown) of a wheelchair. The hub 1 is fixed in a manner known per se with spokes (not shown either) in the rim of the hand-rim wheel. The hub 1 can rotate about a stationary axle 2. The axle 2 has a part 3 which projects from the hub 1 and can be inserted non-rotatably into a holder (not shown) fixed on the frame of the wheelchair.

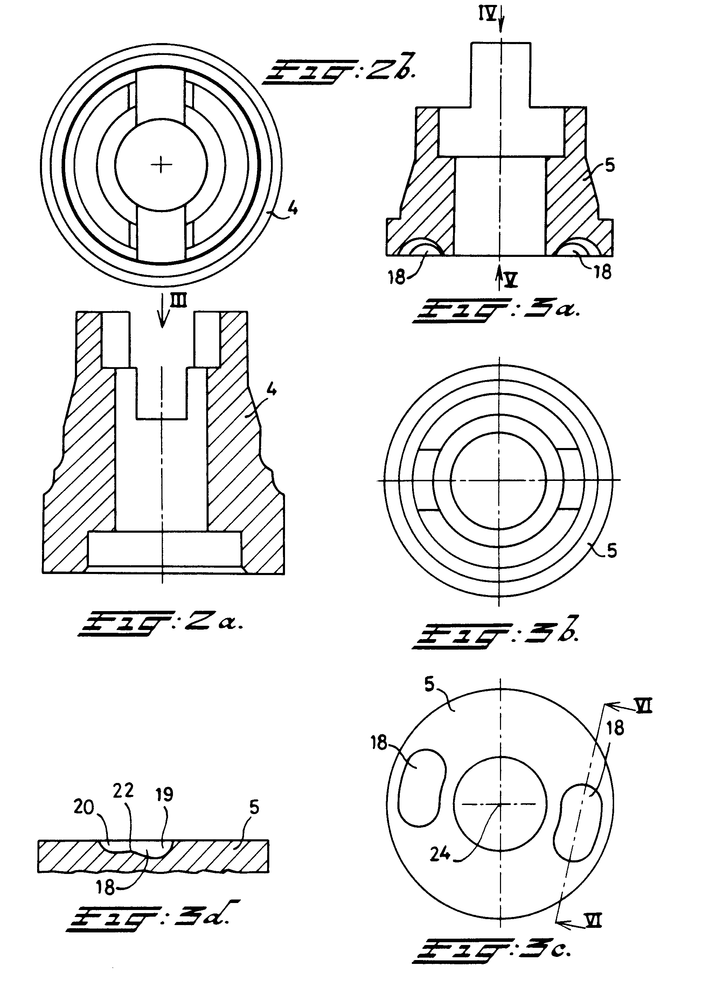

A hub brake according to the invention is fitted in the hub 1, in order to brake the hub 1 and keep it blocked relative to the stationary axle 2. The hub brake comprises a stationary cone 4 screwed down on the axle 2, which cone is shown in detail in Figs. 2a and 2b. Further into the hub 1 is a cone 5, which fits with some play around the stationary axle 2 and is slidable in the axial direction within a small range along the axle 2. In the context of the present invention the cone 5 is described as the slidable cone 5 of the hub brake. The cones 4 and 5 interact with an essentially cylindrical brake jacket 6. The metal brake jacket 6 is of a type which is known in back-pedalling brakes for bicycles, i.e. the brake jacket 6 is provided with a V-shaped cut in the lengthwise direction. At both ends the brake jacket 6 is provided with conical faces corresponding essentially to the conical faces of the two cones 4 and 5. Pressing the slidable cone 5 in the direction of the stationary cone 4 into the brake jacket 6 will cause the brake jacket 6 to expand and come to rest with a braking action against the inside of the hub 1. This action is generally known in back-pedalling brakes. A compression spring 7, indicated by a dotted line in Fig. 1, is placed between the cone 4 and the cone 5.

A control element 10, projecting on the outside of the wheelchair wheel, is fitted in order to ensure that a person sitting in the wheelchair can operate the hub brake using the hand also being used to propel the wheelchair by means of the hand-rim fitted on the wheel. The control element 10 comprises an adjusting ring 11 and a rotary ring 12. A plastic rotary knob 13, which can be gripped by hand, is detachably connected to the rotary ring 12. The adjusting ring 11 fits with some play around the stationary axle 2, while the rotary ring 12 can rotate with a sliding fit about the axle 2. Two pins 14 are fitted for the purpose of ensuring that a rotary movement supplied to the rotary knob 13 is transmitted from the rotary ring 12 to the adjusting ring 11. The pins 14 project into the cavities lying in line with one another in the adjusting ring 11 and in the rotary ring 12. The rotary ring 12 is fixed in the axial direction relative to the axle 2 by means of clamping discs 15 fitted on the axle 2.

A bearing 16 with bearing balls is present between the stationary cone 4 and the hub 1, for the purpose of supporting the hub 1 in a rotatably mounted manner. A similar bearing 17 is present between the rotary ring 12 and the hub 1 for the bearing-mounted support of the other end of the hub 1.

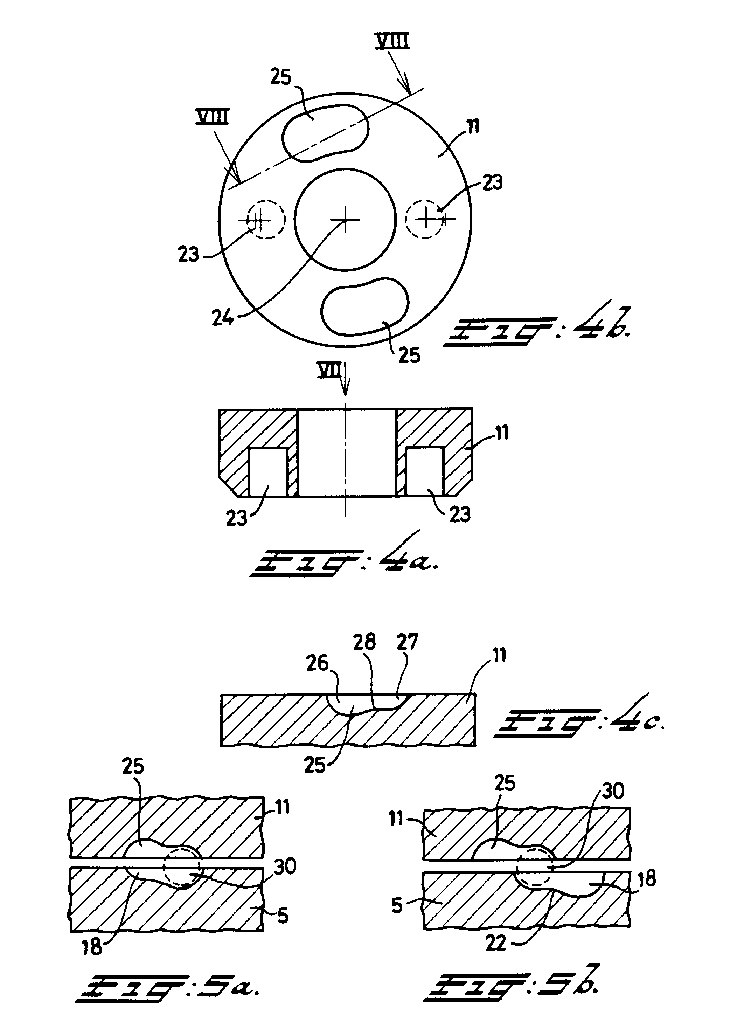

Figs. 2a and 2b show clearly the stationary cone 4, which is fitted in a fixed position on the axle 2. In conjunction with Figs. 3a and 3b it is clear from these figures that the slidable cone 5 is slidable in the axial direction, and in the rotational direction projects non-rotatably into the stationary cone 4 (see also Fig. 1). For the rest, this construction is known in back-pedalling brakes.

Fig. 3c shows that the slidable cone 5 is provided with a pair of recesses 18 which are made symmetrical relative to the axis 24. The shape of the recesses 18 can be seen clearly from Fig. 3d. Each recess 18 has a deeper part 19 and a shallower part 20, while a slightly more elevated transition 22 is present between the two parts 19, 20.

Fig. 4a shows the adjusting ring 11, which is provided with diametrically situated bores 23, for the accommodation therein of the ends of the pins 14 (see Fig. 1). It can be seen in Fig. 4b that at its side facing the slidable cone 5 the adjusting ring 11 is provided with a pair of recesses 25, the shape of which is shown clearly in the section in Fig. 4c. The recesses 25 are also made symmetrical relative to the axis 24. Each recess 25 has a deeper part 26 and a shallower part 27, while a slightly less deep transition 28 is present between the two parts 26, 27.

The way in which the hub brake described above works can be seen clearly from Figs. 5a and 5b. In Figs. 5a and 5b it can be seen that a ball 30 is present in a cavity formed by a recess 18 of the slidable cone 5 and a recess 25 of the adjusting ring 11. In the first mutual angular position of the cone 5 and the adjusting ring 11 shown in Fig. 5a the recesses 18 and 25 are lying directly opposite each other, and the ball 30 is lying in the deeper part of the recess 18 and in the shallower part of the recess 25. The distance between the adjusting ring 11 and the slidable cone 5 is shortest in this position of the ball 30. The slidable cone 5 is therefore not pressed into the brake jacket 6 (see

Fig. 1) and the hub 1 is not braked. If the adjusting ring 11 is then rotated relative to the cone 5, which is secured against rotation, the ball 30 is forced towards the shallower part of the recess 18 in the cone 5. This causes the cone 5 and the adjusting ring 11 to move apart. Since the adjusting ring 11 is fixed axially relative to the axle 2 by means of the rotary ring 12 resting against the clamping discs 15 (see Fig. 1), this means that the cone 5 is pressed into the brake jacket 6. The brake jacket 6 consequently expands, and the hub 1 is braked. If the rotary movement of the adjusting ring 11 relative to the cone is continued, the ball 30 in the end is moved over the transition 22, with a continuing further increase in the braking action of the brake jacket 6. This leads to the position shown in Fig. 5b. The ball 30 now lies in the shallow parts of the recesses 18 and 25. In this mutual locking position of the cone 5 and the adjusting ring 11 the braking action exerted by the brake jacket 6 is so great that blockage of the wheel in which the hub 1 is accommodated occurs. Only by deliberately turning the rotary knob 13 in the opposite direction can the ball 30 be moved over the transition 22 again, in order to remove the blocking effect.

It can also be seen in Fig. 1 that for setting the initial tension in the compression spring 7 provision is made for adjustment of the pins 14 in the axial direction. This is carried out by means of adjusting bolts 31 which are screwed into the rotary ring 12 and which can each press a pin 14 outwards when a ball 32 is placed between them. The adjusting bolts 31 can be turned if the rotary knob 13 is removed.

Finally, the design of the axle 2 suitable in particular for removable wheelchair wheels is shown in Fig. 1. At its end for insertion into a fixing holder (not shown) the axle 2 is provided with coupling elements 35 in the form of balls, which can be moved into and out of the axle 2. The balls can move inwards into the axle 2 if a central push button 36 is operated, which button is accommodated in the rotary knob 13. The push button 36 operates a control rod 37 for the coupling elements 35, which control rod extends through the hollow axle 2.

## Claims

1. Hub brake for braking a hub (1) which is rotatable about a stationary axle (2) projecting into the hub, comprising a cone (4) to be fitted so that it is stationary on the axle, a cone (5) which is slidable axially along the axle and is secured against rotation, an expandable brake jacket (6) which interacts with both cones, and a control element (11, 12) which is placed next to the slidable cone so that it is axially fixed and can rotate about the axle, said control element interacting with the slidable cone (5) in such a way that when it rotates about the stationary axle (2) the slidable cone is pressed into the brake jacket in the direction of the fixed cone, with the result that the brake jacket resting on the two cones expands and acts in a braking manner on the inside of the hub, characterized in that the control element is lockable in a position in which the slidable cone (5) is pressed in the direction of the fixed cone (4), in order to keep the hub (1) blocked relative to the stationary axle (2).

2. Hub brake according to claim 1, characterized in that the hub brake comprises a locking mechanism which couples the control element to the stationary axle in a locked angular position.

3. Hub brake according to claim 2, characterized in that the control element is provided with means for locking the control element in a locked angular position relative to the slidable cone.

4. Hub brake according to one or more of the preceding claims, characterized in that at their sides facing each other the slidable cone (5) and the control element (11, 12)) are each provided with at least one recess (18, 25), and in that a rolling element (30) is disposed in a cavity bounded by two interacting recesses of the cone and the control element respectively, the recesses being formed such that in a first mutual angular position of the cone and the control element the axial distance between the slidable cone and the control element is smaller than it is in a second angular position.

5. Hub brake according to claim 4, characterized in that at least one recess (18, 25) is designed such that it comprises a deeper part (19, 26) and a shallower part (20, 27) communicating therewith by way of a relative elevation (22, 28), while in the second mutual angular position of the slidable cone and the control element the rolling element (30) lies in the shallower part of said recess.

6. Hub brake according to claim 5 or 6, characterized in that the slidable cone (5) and the control element (11, 12) are each provided with at least one pair of recesses (18, 25) which are made symmetrical relative to the axis of the stationary axle (2) to be passed through them.

7. Hub brake according to one or more of claims 4 - 6, characterized in that the control element comprises a ring (11) in which the recesses (25) are formed, and which fits with play around the stationary axle (2), and a rotary element (12) which fits without play around the stationary axle (2), while a driver coupling (14) for transmitting the rotary movement of the rotary element to the ring is present between the ring and the rotary element.

8. Hub brake according to claim 7, characterized in that adjusting means (31) are provided for setting the position of the ring (11) relative to the rotary element (12).

9. Hub brake according to one or more of the preceding claims, characterized in that a first bearing (16) is fitted around the stationary cone, and a second bearing (17) is fitted around the control element (11, 12), for the purpose of bearing-mounted support of the hub.

10. Wheelchair wheel provided with a hub brake according to one or more of claims 1 - 9.
